# EUROPÄISCHE PATENTSCHRIFT

(11) **EP 2 493 746 B1**
(45) Veröffentlichungstag und Bekanntmachung des Hinweises auf die Patenterteilung: **02.09.2015**
(21) Anmeldenummer: 10778588.3
(22) Anmeldetag: 21.10.2010
(51) Int. Cl.: B62D 15/02

(54) **VERFAHREN ZUR UNTERSTÜTZUNG EINES FAHRERS BEIM EINPARKEN**
METHOD FOR ASSISTING A DRIVER WHILE PARKING
PROCÉDÉ D'AIDE AU STATIONNEMENT

(30) Priorität: 29.10.2009 DE 102009046155
(43) Veröffentlichungstag der Anmeldung: 05.09.2012
(73) Patentinhaber: Robert Bosch GmbH, 70442 Stuttgart (DE)
(72) Erfinder: BECKER, Markus, 71732 Tamm (DE); NIEMZ, Volker, 71277 Rutesheim (DE)
(86) Internationale Anmeldenummer: PCT/EP2010/065884
(87) Internationale Veröffentlichungsnummer: WO 2011/051160

(56) Entgegenhaltungen:
- WO-A1-2005/085043
- WO-A2-2006/069976
- DE-A1-102007 004 972
- DE-A1-102007 055 390

## Beschreibung

### Stand der Technik

Die Erfindung geht aus von einem Verfahren zur Unterstützung eines Fahrers beim Einparken in eine Längsparklücke gemäß dem Oberbegriff des Anspruchs 1.

Es sind unterschiedliche Systeme bekannt, die den Fahrer eines Fahrzeugs beim Einparken in eine Parklücke, insbesondere in eine Längsparklücke, unterstützen. Bei solchen Systemen wird üblicherweise während des Vorbeifahrens an einer Parklücke durch einen seitlich am Fahrzeug angebrachten Sensor der Abstand zu Objekten neben dem Fahrzeug gemessen. Anhand des ermittelten Signalverlaufs wird erkannt, wo sich eine geeignete Parklücke befindet.

Wenn in eine so ermittelte Parklücke eingeparkt wird, übernimmt das System zur Unterstützung des Fahrers des Fahrzeugs beim Einparken den Lenkvorgang, während der Fahrer nur die Bremse und das Fahrpedal zu betätigen hat. Der Lenkeingriff durch das System erfolgt dabei so, dass das einzuparkende Fahrzeug sowohl an den die Parklücke begrenzenden Objekten vorbeilenkt als auch am Ende parallel zu einer Fahrbahnbegrenzung, zum Beispiel einem Bordstein steht. Alternativ sind auch Systeme am Markt, in denen der Fahrer noch selbst lenken muss, jedoch vom System Hinweise erhält, wie er jeweils zu lenken hat, um in die Parklücke zu gelangen.

Damit das System zur Unterstützung des Fahrers des Fahrzeugs beim Einparken den Lenkvorgang übernehmen kann, wird vor dem eigentlichen Einparkvorgang zunächst eine geeignete Bahn berechnet, entlang der das Fahrzeug in die Parklücke einfährt. Eine solche Bahn besteht üblicherweise aus einer festen Abfolge von Teilstücken. Die einzelnen Teilstücke, aus denen die Bahn zusammengesetzt ist, sind Geraden, Klothoiden und Kreise. Die Klothoiden sind notwendig, um den Lenkradwinkel von einem stationären Zustand, zum Beispiel einer Kreisbahn oder einer Geraden, bei denen jeweils ein konstanter Lenkradwinkel eingestellt ist, in einen anderen stationären Zustand zu überführen. Ohne Klothoidenstücke, um den Lenkradwinkel zu ändern, müsste das Lenkrad bei einem Übergang zweier stationärer Zustände im Stillstand die geforderte Anforderung umsetzen.

Derzeit eingesetzte Systeme zur Bahnplanung adaptieren sich nicht an die betroffene unmittelbare Umgebung des Fahrzeugs. Dadurch kann es insbesondere bei engen Straßen zu Kollisionen mit Objekten auf der der Längsparklücke gegenüberliegenden Seite kommen. Die Kollisionsgefahr ist dabei eng mit dem zu verwendenden Einscherradius verknüpft, da der Einscherradius das Ausscherverhalten des Fahrzeugs auf die Gegenfahrbahn beeinflusst. Je kleiner der Radius ist, desto weiter schert die vordere linke Ecke des Fahrzeugs auf die Gegenfahrbahn aus.

Verfahren zur Unterstützung des Fahrers eines Fahrzeugs beim Einparken sind zum Beispiel in WO-A 2004/007232 oder in US-A 2008/0177443 beschrieben.

DE 10 2007 055390 A1 ein Verfahren zur Unterstützung eines Fahrers beim Einparken in eine Längsparklücke, bei dem Daten der Umgebung der Längsparklücke während des Vorbeifahrens erfasst werden und aus erfassten Daten eine geeignete Einparktrajektorie berechnet wird, wobei: die Einparktrajektorie so berechnet wird, dass ein erster vom Fahrzeug gefahrener Einscherradius maximal ist, damit ein Ausscheren des Fahrzeugs beim Einparken minimiert wird und eine Kollision mit den die Längsparklücke begrenzenden Objekten vermieden wird.

### Offenbarung der Erfindung

### Vorteile der Erfindung

Beim erfindungsgemäßen Verfahren zur Unterstützung eines Fahrers beim Einparken in eine Längsparklücke, bei dem Daten der Umgebung der Längsparklücke während des Vorbeifahrens erfasst werden und aus den erfassten Daten eine geeignete Einparktrajektorie berechnet wird, wird die Einparktrajektorie so berechnet, dass ein erster vom Fahrzeug gefahrener Einscherradius maximal ist, damit ein Ausscheren des Fahrzeugs beim Einparken minimiert wird und eine Kollision mit den die Längsparklücke begrenzenden Objekten vermieden wird.

Durch das Minimieren des Ausscherens des Fahrzeugs beim Einparken wird die Gefahr einer Kollision mit Objekten, beispielsweise Fahrzeugen, auf der Gegenfahrbahn ebenfalls minimiert und sogar vollkommen vermieden. Eine Vermeidung ist insbesondere dann möglich, wenn durch den maximalen Einscherradius das Ausscheren so gering ist, dass kein Ausscheren auf die Gegenfahrbahn erfolgt.

Die Längsparklücke begrenzende Objekte, mit denen eine Kollision vermieden werden soll, sind zum Beispiel Fahrzeuge, die vor und hinter der Längsparklücke, in die das Fahrzeug einparkt, abgestellt sind. Das Fahrzeug, das sich vor der Längsparklücke befindet, bildet dabei eine vordere Begrenzung der Längspark-lücke und ein Fahrzeug hinter der Längsparklücke die hintere Begrenzung der Längsparklücke.

Der maximale Einscherradius, der vom Fahrzeug durchfahren wird, ist abhängig von der Länge der Parklücke, in die das Fahrzeug eingeparkt werden soll. Der Einscherradius wird idealerweise so gewählt, dass das Fahrzeug mit einem Zug in die Parklücke einscheren kann und nicht mehrere Rangierzüge notwendig sind.

In einer ersten Ausführungsform der Erfindung wird der maximal mögliche Einscherradius ausgehend von der aktuellen Standposition des Fahrzeugs berechnet. Die aktuelle Standposition des Fahrzeugs ist die Position, von der aus der Einparkvorgang in die Längsparklücke startet. Durch die Berechnung des Einscherradius ausgehend von der aktuellen Standposition des Fahrzeugs ist es möglich, das Fahrzeug mit einem Zug in die Parklücke einzuparken. Während des Einparkvorganges muss somit kein Gangwechsel durchgeführt werden.

In einer alternativen Ausführungsform wird dem Fahrer ein Hinweis gegeben, weiter vorzufahren, wenn von einer Startposition, die sich vor der aktuellen Position des Fahrzeugs befindet, ein möglicher größerer maximaler Einscherradius realisierbar ist. Durch den größeren maximalen Einscherradius von einer Startposition, die sich vor der aktuellen Position des Fahrzeugs befindet, kann das Ausscheren des Fahrzeugs beim Einparken weiter minimiert werden. Zur Berechnung des Einscherradius sind jedoch auch hier die die Parklücke begrenzenden Objekte zu berücksichtigen. Um ein Einparken in einem Zug zu ermöglichen, kann daher nicht beliebig weit vorgefahren werden und der erste Einscherradius beliebig groß gewählt werden. Der maximale Einscherradius ergibt sich immer aus dem Radius, der möglich ist, um ein minimales Ausscheren zu erreichen und um Kollisionen mit Objekten, die die Parklücke begrenzen, zu vermeiden.

Wenn es möglich ist, dass das Einparken in mehreren Zügen erfolgt, ist es auch möglich, einen größeren Einscherradius zu wählen. Jedoch ist es bevorzugt, dass der maximale Einscherradius so gewählt wird, dass ein Einparken in die Längsparklücke in einem Zug möglich ist.

In einer bevorzugten Ausführungsform schließt die Erfassung der Daten der Umgebung der Längsparklücke auch Objekte auf der der Längsparklücke gegenüberliegenden Seite ein. Durch die Erfassung von Objekten auch auf der der Längsparklücke gegenüberliegenden Seite lässt sich der maximal mögliche Einscherradius an die Gegebenheiten auch auf der gegenüberliegenden Seite anpassen. So ist es zum Beispiel bei einem großen Abstand zu einem Objekt auf der gegenüberliegenden Seite möglich, einen kleineren Einscherradius zu wählen, wohingegen bei einem geringen Abstand zu einem Objekt auf der gegenüberliegenden Seite ein größerer maximaler Einscherradius notwendig ist, um das Ausscheren des Fahrzeugs beim Einparken so einzustellen, dass keine Kollision mit dem Objekt auf der gegenüberliegenden Seite erfolgt.

Ein weiterer Vorteil der Erfassung von Objekten auf der der Längsparklücke gegenüberliegenden Seite ist, dass die Startposition, von der aus der Einparkvorgang gestartet wird, abhängig von Objekten auf der gegenüberliegenden Seite gestaltet werden kann. Wenn zum Beispiel keine Objekte auf der der Parklücke gegenüberliegende Seite detektiert werden, ist eine Startposition näher zur Längsparklücke möglich, als in dem Fall, in dem Objekte auf der gegenüberliegenden Seite detektiert werden.

Wenn es zur Vermeidung einer Kollision mit einem Objekt auf der der Längsparklücke gegenüberliegenden Seite notwendig ist, den maximalen Einscherradius so zu wählen, dass ein Einparken in einem Zug nicht möglich ist, werden in einer Ausführungsform mehrere notwendige Rangierzüge berechnet und gegebenenfalls angezeigt. Alternativ ist es jedoch auch möglich, dass in diesem Fall die Parklücke als nicht geeignet angezeigt wird und der Fahrer aufgefordert wird, eine alternative Längsparklücke zu suchen.

In den Fällen, in denen kein Objekt auf der der Längsparklücke gegenüberliegenden Seite erfasst wird, wird der maximale Einscherradius vorzugsweise so gewählt, dass ein Einparken in einem Zug möglich ist.

Die für das Verfahren notwendige Erfassung der Umgebung des Fahrzeugs erfolgt im Allgemeinen durch dem Fachmann bekannte Vorrichtungen. So werden üblicherweise zum Erfassen der Umgebung des Fahrzeugs Sensoren eingesetzt, die Objekte in der Fahrzeugumgebung erfassen können. Geeignete Sensoren sind zum Beispiel Ultraschallsensoren, Radarsensoren, Infrarotsensoren, kapazitive Sensoren oder LIDAR-Sensoren. Mit den Sensoren wird eine Entfernung zwischen einem Objekt und dem Sensor erfasst. Die so ermittelten Entfernungen werden einem Steuersystem zugeführt, in dem die erfassten Daten ausgewertet werden und so Richtung und Entfernung zu dem Objekt ermittelt werden. Geeignete Auswerteverfahren, mit denen die Richtung und die Entfernung zu einem Objekt bestimmt werden, sind zum Beispiel Trilaterationsverfahren bzw. Triangulationsverfahren. Da von einem Sensor im Allgemeinen nur die Entfernung und nicht die Richtung zu einem Objekt erfasst werden kann, werden zur Richtungsbestimmung zum Objekt üblicherweise mindestens zwei Sensoren benötigt. Alternativ kann die Richtung auch durch zwei Messungen mit einem Sensor bei einem sich bewegendem Fahrzeug bestimmt werden. Aus den unterschiedlichen Laufzeiten vom Senden des Signals bis zum Empfang des Echos, lässt sich dann die Entfernung des jeweiligen Sensors zum Objekt und damit auch die Richtung des Objekts bestimmen.

Das erfindungsgemäße Verfahren ist sowohl bei semi-automatischen als auch bei vollautomatischen Systemen, die den Fahrer beim Einparken in eine Längsparklücke unterstützen, einsetzbar. Bei vollautomatischen Systemen wird neben dem Lenkeingriff auch die Längsführung, d.h. Beschleunigung und Abbremsen des Fahrzeugs sowie das Halten einer konstanten Geschwindigkeit vom Fahrzeug übernommen. Der Fahrer hat hierbei lediglich eine überwachende Funktion. Bei semi-automatischen Systemen wird die Längsführung vom Fahrer übernommen. Das heißt, dass der Fahrer selbsttätig bremsen und beschleunigen muss. Wenn ein Richtungswechsel erforderlich ist, wird dies dem Fahrer angezeigt, damit der Fahrer dann den passenden Gang einlegen kann. Bei semi-automatischen Systemen wird weiterhin unterschieden in Systeme, die den Lenkeingriff selbsttätig übernehmen und Systeme, die dem Fahrer anzeigen, welche Lenkradposition einzunehmen ist, um die vorgegebene Bahn zu durchfahren. Wenn dem Fahrer Hinweise gegeben werden, welche Lenkradposition einzunehmen ist, um die vorgegebene Bahn zu durchfahren, sollte die Reaktionszeit des Fahrers und auch das Fahrverhalten des Fahrers berücksichtigt werden. Zum Beispiel ist hierbei zu berücksichtigen, ob der Fahrer im Allgemeinen schnell oder langsam lenkt. Hierzu ist es zum Beispiel möglich, ein lernendes System vorzusehen, dass das Fahrverhalten des Fahrers erfasst und aus dem Fahrverhalten des Fahrers die für das Durchfahren der Einparktrajektorie notwendigen Parameter ermittelt.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine Einparktrajektorie eines Einparksystems mit automatischer Lenkradführung,
- Figur 2: einen schematischen Aufbau der Bahnplanung eines Einparksystems mit automatischer Lenkradführung,
- Figur 3.1: Einparktrajektorien mit einem starren Einscherradius und einem adaptiven Einscherradius,
- Figur 3.2: Lenkwinkel der in Figur 3.1 dargestellten Einparktrajektorien,
- Figur 3.3: Gierwinkel des Fahrzeugs zu den entsprechenden Einparktrajektorien,
- Figur 4: Einparktrajektorien mit starrem Einscherradius und adaptivem Einscherradius sowie das jeweilige Ausscherverhalten der linken vorderen Ecke.

### Ausführungsbeispiele der Erfindung

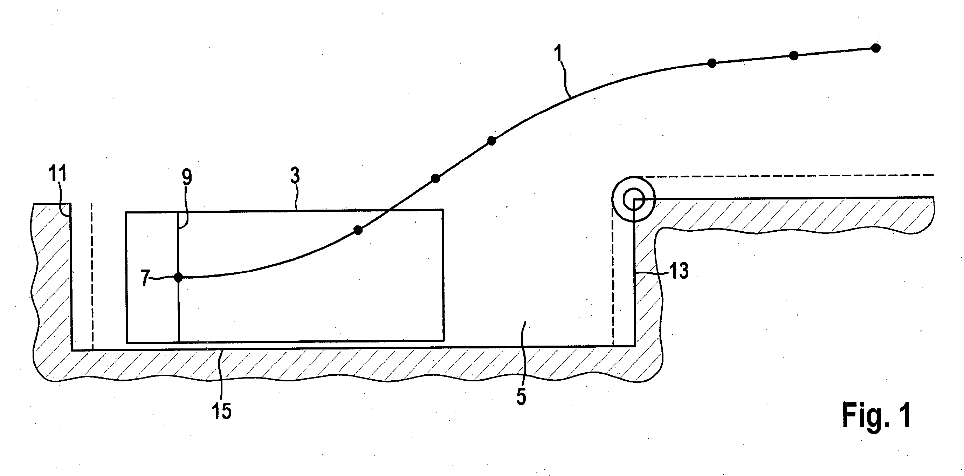

In Figur 1 ist eine Einparktrajektorie eines Einparksystems mit automatischer Lenkradführung dargestellt.

Eine Einparktrajektorie 1 beschreibt eine Bahn, die ein Fahrzeug 3 in eine Längsparklücke 5 zurücklegt. Die Einparktrajektorie 1 ist dabei üblicherweise die Bahn, die der Mittelpunkt der Hinterachse 9 überstreicht. Die Einparktrajektorie 1 wird üblicherweise so berechnet, dass das Fahrzeug 3 in einem Zug in die Längsparklücke 5 einparken kann. Ein Zug bedeutet dabei, dass es nicht notwendig ist, den Gang zu wechseln um abwechselnd vorwärts und rückwärts Fahrmanöver durchzuführen. Üblicherweise erfolgt das Einparken in eine Längsparklücke 5 rückwärts. Hierzu fährt das Fahrzeug mit dem Mittelpunkt 7 der Hinterachse 9 rückwärts entlang der Einparktrajektorie 1.

Die Längsparklücke 5, in die das Fahrzeug 3 einparkt, ist im Allgemeinen durch eine hintere Begrenzung 11, eine vordere Begrenzung 13 und eine seitliche Begrenzung 15 begrenzt. Die hintere Begrenzung 11 und die vordere Begrenzung 13 wird im Allgemeinen durch Fahrzeuge gebildet. Es ist jedoch auch möglich, dass die hintere Begrenzung 11 und die vordere Begrenzung 13 zum Beispiel durch Blumenkübel, Pflanzen, Zäune oder beliebige andere Objekte gebildet werden. Die seitliche Begrenzung 15 ist im Allgemeinen ein Bordstein. Jedoch kann die seitliche Begrenzung 15 auch durch eine Mauer, eine Hecke oder beliebige andere Objekte gebildet werden.

Die Einparktrajektorie 1 wird so berechnet, dass das Fahrzeug am Ende der Einparktrajektorie 1 parallel zur Fahrtrichtung in der Längsparklücke 5 steht.

Neben den Längsparklücken 5, die eine vordere Begrenzung 11 und eine hintere Begrenzung 13 aufweisen, ist es auch möglich, dass die Längsparklücke 11 nur eine hintere Begrenzung 11 oder nur eine vordere Begrenzung 13 aufweist. Um eine solche Parklücke zu erkennen, ist es zum Beispiel möglich, dass der Fahrer dem System mitteilt, dass das Fahrzeug an einer Längsparklücke vorbeifährt. Die Mitteilung kann zum Beispiel durch Betätigung eines geeigneten Betätigungsmittels, beispielsweise eines Schalters erfolgen. Wenn die Längsparklücke die letzte Parklücke in einer Reihe ist, ist es auch möglich, dass das System zum Beispiel anhand eines aufgenommenen Musters, bei dem jeweils Objekte neben dem Fahrzeug im Wechsel mit kurzen freien Stellen detektiert werden, erkennt werden. Wenn sich die Parklücke als letzte Parklücke in einer Reihe befindet und somit keine vordere Begrenzung 13 aufweist, kann die Einparktrajektorie prinzipiell abweichend von einer Einparktrajektorie in eine Längsparklücke mit einer hinteren Begrenzung 11 und einer vorderen Begrenzung 13 berechnet werden. Dies ist insbesondere deshalb möglich, da kein Objekt umfahren werden muss, dass die vordere Begrenzung 13 bildet, um eine Kollision mit diesem Objekt zu vermeiden.

Die Suche einer geeigneten Längsparklücke 5 erfolgt im Allgemeinen durch Vermessung der Parklücke 5 während der Vorbeifahrt mit dem Fahrzeug 3. Hierzu ist seitlich am Fahrzeug 3 ein Sensor angebracht, der den Bereich neben dem Fahrzeug 3 erfasst und auf diese Weise detektiert, ob eine geeignete Längsparklücke 5 vorhanden ist. Im Allgemeinen ist eine Längsparklücke 5 dann geeignet, wenn deren Länge größer ist als die Länge des Fahrzeugs, insbesondere das mindestens 1,5- fache der Länge des Fahrzeugs 3 beträgt.

Die Erfassung der Längsparklücke 5 erfolgt durch geeignete am Fahrzeug 1 angebrachte Sensoren. Geeignete Sensoren sind zum Beispiel Ultraschallsensoren, Radarsensoren, Infrarotsensoren, kapazitive Sensoren oder LIDAR-Sensoren. Von den Sensoren wird jeweils der Abstand zu Objekten seitlich neben dem Fahrzeug erfasst und bei einem größeren Abstand, wie er zum Beispiel in der hier dargestellten Ausführungsform zwischen der hinteren Begrenzung 11 und der vorderen Begrenzung 13 vorhanden ist, wird ein entsprechend größerer Abstand detektiert. Aus den so erfassten Daten kann ein Steuersystem im Fahrzeug 3 erfassen, ob eine Längsparklücke 5 vorliegt.

Sobald eine geeignete Längsparklücke gefunden wurde, wird die Einparktrajektorie berechnet. Die Einparktrajektorie 1 setzt sich im Allgemeinen aus Geraden- stücken, Kreisbögen und Klothoiden zusammen. Dabei verbinden die Klothoiden jeweils Bereiche mit einem starren, sich aber unterscheidenden Lenkeinschlag. So werden zum Beispiel Geraden und Kreisbögen jeweils durch eine Klothoide verbunden, aber auch Kreisbögen mit unterschiedlichen Radien. Auch ein Übergang von einem Rechtsbogen in einen Linksbogen wird durch eine Klothoide gebildet.

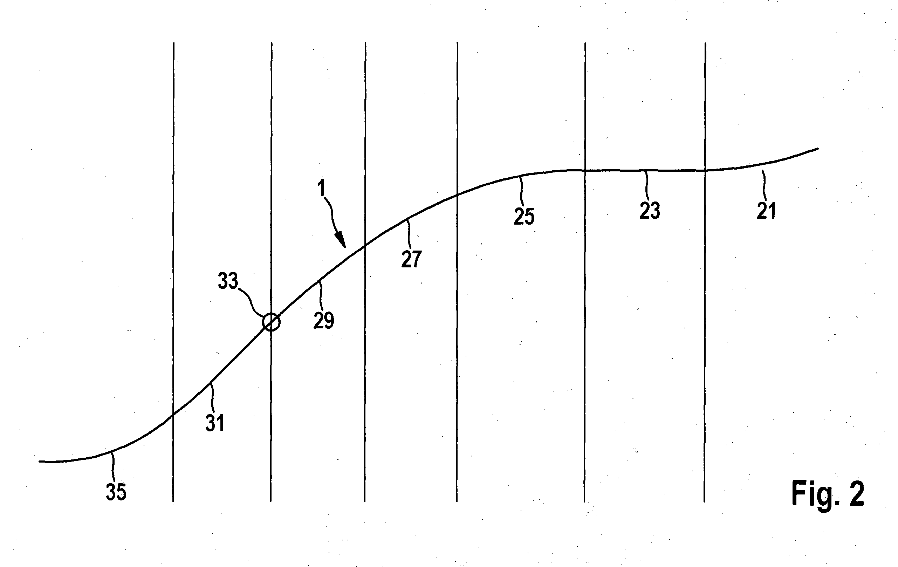

Ein schematischer Aufbau einer Einparktrajektorie eines Einparksystems mit automatischer Lenkradführung ist in Figur 2 dargestellt.

Die hier dargestellte Einparktrajektorie 1 ist aufgebaut aus einer ersten Klothoide 21, entlang der das Lenkrad und damit die lenkbaren Räder des Fahrzeugs in eine gerade Position gebracht werden. An die erste Klothoide 21 schließt sich ein erster Geradenabschnitt 23 an. Entlang dem ersten Geradenabschnitt 23 wird das Fahrzeug in eine für den weiteren Einparkvorgang günstige Position gebracht. Entlang einer zweiten Klothoide 25, die sich an den ersten Geradenabschnitt 23 anschließt, wird das Einparkmanöver eingeleitet. Während sich das Fahrzeug entlang der zweiten Klothoide 25 bewegt, wird die Lenkradposition und damit die Position der lenkbaren Räder des Fahrzeugs 3 in eine Position gebracht, mit der ein sich an die zweite Klothoide 25 anschließender erster Kreisbogen 27 durchfahren werden kann. An den ersten Kreisbogen 27 schließen sich eine dritte Klothoide 29 und eine vierte Klothoide 31 an. Entlang der dritten Klothoide 29 und der vierten Klothoide 31 erfolgt wieder eine Lenkbewegung, das heißt insbesondere eine Änderung der Richtung der lenkbaren Räder des Fahrzeugs. Die Änderung geht hierbei über eine Neutralstellung 33 hinaus. In der Neutralstellung 33 sind die lenkbaren Räder gerade ausgerichtet, das heißt, dass ein Fahrzeug mit einer Stellung der lenkbaren Räder in dieser Position geradeaus vorwärts oder rückwärts fahren kann. Über die Neutralstellung 33 ändert sich der zu fahrende Weg des Fahrzeugs von einem Linksbogen in einen Rechtsbogen. Über die vierte Klothoide 31, die sich nach der Neutralstellung 33 an die dritte Klothoide 29 anschließt, wird die Position der lenkbaren Räder soweit geändert, bis diese in einer Position für einen zweiten Kreisbogen 35, der sich an die vierte Klothoide 31 anschließt, stehen. Entlang des zweiten Kreisbogens 35 wird das Fahrzeug in seine Endposition in der Längsparklücke gebracht.

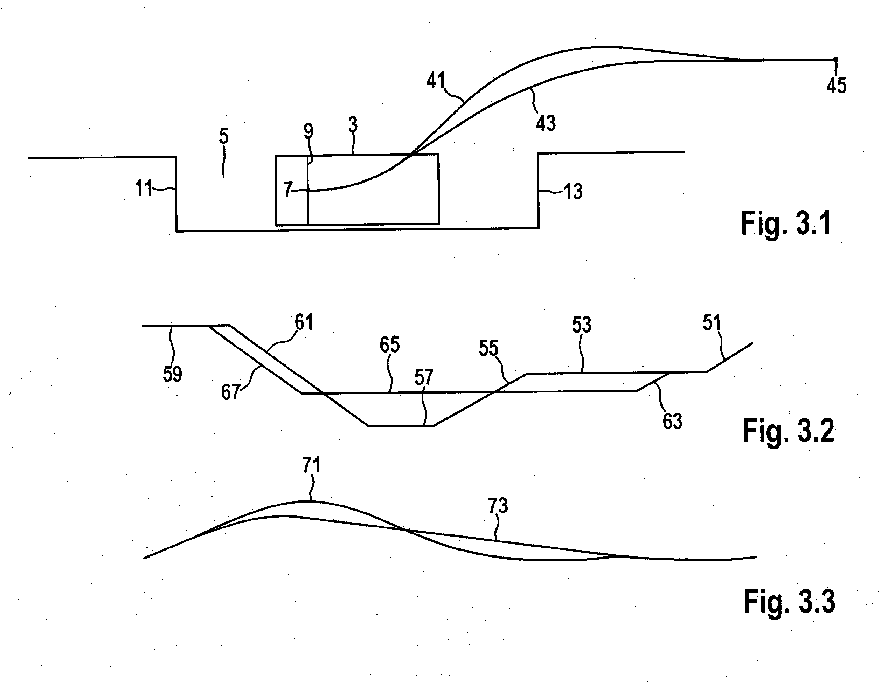

Neben der hier dargestellten beispielhaften Einparktrajektorie 1 kann die Einparktrajektorie auch beliebig andere Abfolgen an Geradenabschnitten, Klothoiden und Kreisbögen aufweisen. Diese sind jeweils von der Geometrie der Längsparklücke und zum Beispiel auch von dem gewünschten Radius des ersten Kreisbogens 27 abhängig. Üblicherweise wird sich eine geeignete Einparktrajektorie 1, wie hier dargestellt, aus einer ersten Klothoide 21, einem ersten Geradenabschnitt 23, einer zweiten Klothoide 25, einem ersten Kreisbogen 27, einer dritten Klothoide 29, einer vierten Klothoide 31 und einem zweiten Kreisbogen 25 zusammensetzen. Die dritte Klothoide 29 und die vierte Klothoide 31 können dabei zu einer Klothoide zusammengefasst werden. Die Unterscheidung in eine dritte Klothoide 29 und eine vierte Klothoide 31, die sich durch Überfahren der Neutralstellung 33 ergibt, ist nicht zwingend notwendig. In Figur 3.1 sind eine Einparktrajektorie mit einem starren Einscherradius und mit einem adaptiven Einscherradius dargestellt.

Einparktrajektorie mit starrem Radius bedeutet, dass zum Einparken vom System ein fester Radius für den Kreisbogen 27 vorgegeben wird. Dieser Radius des ersten Kreisbogens 27 ist dabei im Allgemeinen durch Volleinschlag, das heißt einem großen Lenkradwinkel und damit durch einen kleinen Radius charakterisiert. Dieser Radius hat jedoch den Nachteil, dass das Fahrzeug beim Einparken weit ausschert. Vorteil ist, dass eine kurze Einparktrajektorie realisiert werden kann.

Bei einem System, wie es nach dem Stand der Technik eingesetzt wird, wird ein starrer Einscherradius zum Einparken des Fahrzeugs 3 in die Längsparklücke 5 vorgesehen. Hierbei ergibt sich eine erste Einparktrajektorie 41. Durch den kleinen Radius, der sich bei Vollanschlag ergibt, wird sicher gestellt, dass zum Beispiel ein Objekt, das die vordere Begrenzung 13 der Längsparklücke 5 bildet, sicher umfahren wird und eine Kollision mit diesem Objekt vermieden wird. Jedoch führt der kleine Radius gleichzeitig dazu, dass das Fahrzeug mit seiner linken vorderen Ecke weit ausschert, häufig bis auf die Gegenfahrbahn. Dies kann zum Beispiel bei Gegenverkehr oder auch in schmalen Strassen zu einer Kollision mit Objekten auf der gegenüberliegenden Seite beziehungsweise mit einem entgegenkommenden Fahrzeug führen.

Erfindungsgemäß wird daher in Abhängigikeit von der Geometrie der Parklücke 5 und den die Parklücke begrenzenden Objekten der Radius des ersten Kreisbogens 27 angepasst. Um das Ausscheren des Fahrzeugs beim Einparken zu minimieren, wird der Einparkradius möglichst groß gewählt. Der maximale Radius ergibt sich dabei aus der Geometrie der Parklücke und der Geometrie der die Parklücke begrenzenden Objekte sowie zum Beispiel dem Abstand zu Objekten auf der gegenüberliegenden Seite, die das Ausscheren des Fahrzeugs begrenzen. Durch die Wahl des maximalen Radius des ersten Kreisbogens 27 ergibt sich eine zweite Einparktrajektorie 43, die hier im Vergleich zur ersten Einparktrajektorie 41 in Figur 3.1 dargestellt ist. Durch den großen Radius des ersten Kreisbogens 27 verläuft die Einparktrajektorie sehr viel flacher. Dies führt zu einem geringeren Ausscheren der linken vorderen Ecke des Fahrzeugs 3. Der maximale mögliche Radius des ersten Kreisbogens 27 wird weiterhin so gewählt, dass das Fahrzeug an der Startposition 45 keine weitere Vorfahrbewegung ausführen muss. Der maximal mögliche Einscherradius, das heißt der maximal mögliche Radius des ersten Kreisbogens 27, ergibt sich dabei aus den Vorgaben, dass eine Kollision mit einem die vordere Begrenzung 13 bildenden Objekt vermieden werden soll, ein weiteres Vorfahren des Fahrzeugs 3 zu einer weiter vorne liegenden Startposition 45 vermieden werden soll und die linke vordere Ecke des Fahrzeugs 3 so wenig wie möglich ausscheren soll.

Alternativ ist es auch möglich, den maximalen möglichen Einscherradius so zu bestimmen, dass eine Kollision mit einem die vordere Begrenzung 13 bildenden Objekt vermieden werden soll und das Ausscheren der linken vorderen Ecke des Fahrzeugs 3 minimal gehalten werden soll. In diesem Fall kann es erforderlich sein, dass das Fahrzeug zu einer weiter vorne gelegenen Startposition vorfahren muss. In diesem Fall wird dem Fahrer zum Beispiel eine Anweisung gegeben, weiter vorzufahren. Alternativ ist es auch möglich, insbesondere bei einem vollautomatischen System, dass das Fahrzeug die Vorfahrbewegung selbsttätig übernimmt.

In Figur 3.2 sind die erforderlichen Lenkradeinschläge dargestellt, die notwendig sind, um die erste Einparktrajektorie 41 beziehungsweise die zweite Einparktrajektorie 43 zu durchfahren.

Um die erste Einparktrajektorie 41 zu durchfahren, werden die lenkbaren Räder zunächst durch eine erste Lenkbewegung 51 in Neutralstellung gebracht. Daran anschließend erfolgt eine Geradeausfahrt 53. An die Geradeausfahrt 53 schließt sich eine Klothoide an. Während der Klothoide erfolgt eine Bewegung der lenkbaren Räder von Neutralstellung zum Vollausschlag während einer zweiten Lenkbewegung 55. Anschließend wird ein Kreisbogen mit Vollausschlag der lenkbaren Räder durchfahren. Dies ist durch ein Geradenstück 57 dargestellt. An den Kreisbogen mit Vollausschlag 57 schließt sich eine weitere Klothoide an, entlang der die lenkbaren Räder zum Vollausschlag 59 in entgegengesetzter Richtung gebracht werden. Der Übergang vom Vollausschlag 57 zum Vollausschlag 59 in entgegengesetzter Richtung erfolgt durch eine gleichmäßige dritte Lenkbewegung 61.

Um die zweite Einparktrajektorie 43 zu durchfahren wird ebenfalls mit einer ersten Lenkbewegung 51 gestartet, um die Räder in eine Neutralstellung für die Geradeausfahrt 53 zu bringen. Die Geradeausfahrt 53 ist jedoch zum Durchfahren der zweiten Einparktrajektorie 43 deutlich gegenüber der Streckenlänge zur Geradenausfahrt zum Verfahren der ersten Einparktrajektorie 41 verkürzt. Nach einem kurzen Stück Geradeausfahrt 53 erfolgt eine erste Lenkbewegung 63 mit der die lenkbaren Räder in eine Position für einen ersten Einscherradius gebracht werden. Dieser ist jedoch im Vergleich zum Vollausschlag 57 sehr viel kleiner. Es wird ein deutlich größerer Kreisbogen mit dem geringeren Lenkeinschlag 65 durchfahren. An den Kreisbogen mit Lenkeinschlag 65 schließt sich eine Klothoide mit einer zweiten Lenkbewegung 67 an. Über die Klothoide mit der zweiten Lenkbewegung 67 wird wieder ein Vollausschlag in entgegengesetzter Richtung 59 eingestellt und der letzte Abschnitt der Einparktrajektorie überfahren, um das Fahrzeug 3 in die Parkposition zu bringen.

Der sich einstellende Gierwinkel des Fahrzeugs ist in Figur 3.3 dargestellt. Beim Überfahren der ersten Einparktrajektorie mit Vollausschlag ergibt sich ein Gierwinkel, wie er mit einer ersten Kurve 71 dargestellt ist. Wenn die zweite Einparktrajektorie 43 überfahren wird, ergibt sich ein Gierwinkel, wie er mit der Kurve 73 dargestellt ist. Es zeigt sich, dass bei einem kleineren Lenkeinschlag 65 auch der Gierwinkel kleiner ist.

Ein weiterer Vorteil des geringeren Lenkeinschlages ist, dass auch die Leistungsaufnahme durch den Lenkstellmotor reduziert wird, was auch eine Reduzierung der Kraftstoffaufnahme zur Folge hat.

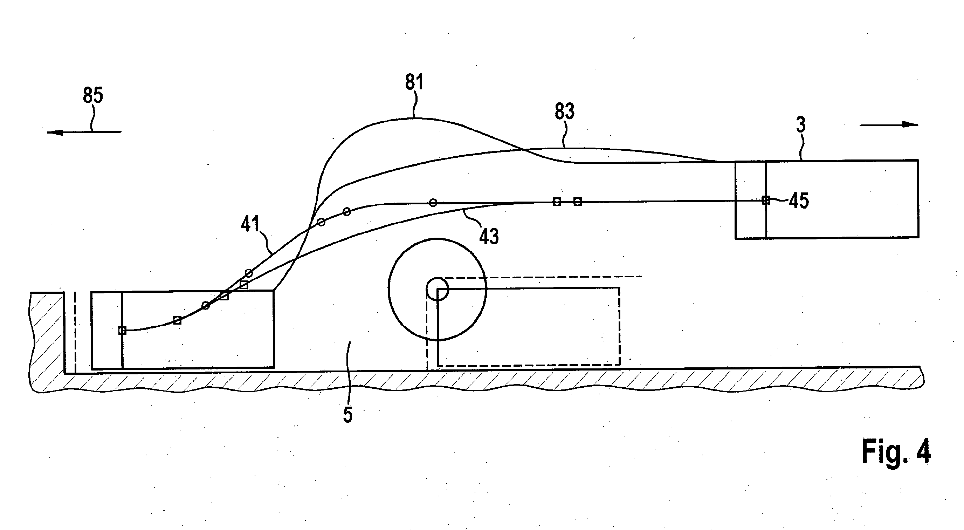

In Figur 4 sind Einparktrajektorien mit starrem und adaptivem Einscherradius und das jeweils zugehörige Ausscherverhalten dargestellt.

Um das Fahrzeug 3 in eine Längsparklücke 5 einzuparken, wird das Fahrzeug bei herkömmlichen Systemen entlang der ersten Einparktrajektorie 41 in die Längsparklücke 5 eingeparkt. Wie zuvor beschrieben, erfolgt das Einparken dabei mit einem ersten Kreisbogen mit minimalem Radius und Volleinschlag der lenkbaren Räder. Dies führt jedoch zu einem starken Ausscheren der linken vorderen Ecke des Fahrzeugs. Dies ist durch eine Kurve 81 dargestellt. Demgegenüber ergibt sich beim Durchfahren der zweiten Einparktrajektorie 43 mit geringem Lenkeinschlag und maximalen Einscherradius für den ersten Kreisbogen 27 ein Ausscherverhalten 83, das sehr viel flacher ist als das Ausscherverhalten 81, wenn die erste Einparktrajektorie 41 überfahren wird. Insbesondere bei einer schmalen Fahrbahn oder bei Gegenverkehr kann ein Einparken entlang der ersten Einparktrajektorie 41 zu einer Kollision mit der gegenüberliegenden Seite 85 führen. Um die Einparktrajektorie 41, 43 an die Situation zum Beispiel dem Abstand zu Objekten auf der gegenüberliegenden Seite 85 anzupassen, ist es vorteilhaft, wenn vom Fahrzeug auch die Objekte auf der gegenüberliegenden Seite 85 erfasst werden. Durch die Anpassung des Einscherradius des ersten Kreisbogens 27 kann eine Kollision mit Objekten beziehungsweise Fahrzeugen auf der Längsparklücke 5 gegenüberliegenden Seiten aktiv verhindert werden. Dies ermöglicht es, mehr Parklücken anzubieten und die Robustheit des Einparksystems um ein Vielfaches zu steigern.

Die Detektion von Objekten auf der gegenüberliegenden Seite 85 ermöglicht es weiterhin, dass zum Beispiel bei einem Einparkvorgang, bei dem kein Objekt auf der gegenüberliegenden Seite 85 detektiert wird, eine Startposition 45 gewählt wird, die näher an der Längsparklücke 5 liegt als bei auf der gegenüberliegenden Seite 85 detektierten Objekten. Dies ist insbesondere deshalb möglich, da ein kleinerer Radius durchfahren werden kann, wenn kein Objekt auf der gegenüberliegenden Seite 85 detektiert wird.

Insbesondere bei einer kurzen Längsparklücke 5 und einem geringen Abstand zu Objekten auf der gegenüberliegenden Seite 85 kann es erforderlich sein, den Einparkvorgang in mehreren Zügen durchzuführen. Dies wird jedoch auf Grund der Kollisionsvermeidung in Kauf genommen.

Neben der Anpassung des Einscherradius für den ersten Kreisbogen 27 kann zusätzlich auch eine Anpassung über den Winkel der lenkbaren Räder, die Krümmung der Trajektorie oder konstante Gierwinkeländerung erfolgen.

## Patentansprüche

1. Verfahren zur Unterstützung eines Fahrers beim Einparken in eine Längsparklücke (5), bei dem Daten der Umgebung der Längsparklücke (5) während des Vorbeifahrens erfasst werden und aus erfassten Daten eine geeignete Einparktrajektorie (1; 43) berechnet wird, **dadurch gekennzeichnet, dass** die Einparktrajektorie (1; 43) so berechnet wird, dass ein erster vom Fahrzeug gefahrener Einscherradius maximal ist, damit ein Ausscheren des Fahrzeugs beim Einparken derart minimiert wird, dass kein Ausscheren des Fahrzeugs auf eine Gegenfahrbahn erfolgt und eine Kollision mit den die Längsparklücke (5) begrenzenden Objekten und eine Kollision mit Objekten auf der Gegenfahrbahn vermieden wird.

2. Verfahren gemäß Anspruch 1, **dadurch gekennzeichnet, dass** der maximal mögliche Einscherradius ausgehend von der aktuellen Standposition des Fahrzeugs berechnet wird.

3. Verfahren gemäß Anspruch 1, **dadurch gekennzeichnet, dass** bei einem möglichen größeren maximalen Einscherradius von einer Startposition, die sich vor der aktuellen Position des Fahrzeugs befindet, dem Fahrer ein Hinweis gegeben wird, weiter vorzufahren.

4. Verfahren gemäß einem der Ansprüche 1 bis 3, **dadurch gekennzeichnet, dass** der maximale Einscherradius so gewählt wird, dass ein Einparken in die Längsparklücke (5) in einem Zug möglich ist.

5. Verfahren gemäß einem der Ansprüche 1 bis 4, **dadurch gekennzeichnet, dass** die Erfassung der Daten der Umgebung der Längsparklücke (5) auch Objekte auf der der Längsparklücke (5) gegenüberliegenden Seite einschließen.

6. Verfahren gemäß einem der Ansprüche 1 bis 5, **dadurch gekennzeichnet, dass** der maximale Einscherradius so gewählt wird, dass eine Kollision mit Objekten auf der der Längsparklücke (5) gegenüberliegenden Seite vermieden wird.

7. Verfahren gemäß Anspruch 6, **dadurch gekennzeichnet, dass** bei einem maximalen Einscherradius, bei dem eine Kollision mit einem Objekt auf der der Längsparklücke (5) gegenüberliegenden Seite vermieden wird, der dazu führt, dass ein Einparken in einem Zug nicht möglich ist, mehrere notwendige Rangierzüge berechnet und gegebenenfalls angezeigt werden.

8. Verfahren gemäß einem der Ansprüche 5 bis 7, **dadurch gekennzeichnet, dass** in Fällen, in denen kein Objekt auf der der Längsparklücke (5) gegenüberliegenden Seite erfasst wird, der maximale Einscherradius so gewählt wird, dass ein Einparken in einem Zug möglich ist.

## Claims

1. Method for assisting a driver while parking in a longitudinal parking space (5), in which method data on the surroundings of the longitudinal parking space (5) are detected while the vehicle drives past, and a suitable parking trajectory (1; 43) is calculated from the detected data, **characterized in that** the parking trajectory (1; 43) is calculated in such a way that a first cutting-in radius which is travelled along by the vehicle is at a maximum so that swinging out of the vehicle during the parking is minimised in such a way that the vehicle is not swinging out into an oncoming carriageway and a collision with the objects which bound the longitudinal parking space (5) and a collision with objects on the oncoming carriageway are avoided.

2. Method according to Claim 1, **characterized in that** the maximum possible cutting-in radius is calculated on the basis of the current location of the vehicle.

3. Method according to Claim 1, **characterized in that** in the case of a possible larger maximum cutting-in radius from a starting position which is located in front of the current position of the vehicle, the driver is supplied with a message to drive further forward.

4. Method according to one of Claims 1 to 3, **characterized in that** the maximum cutting-in radius is selected in such a way that parking into the longitudinal parking space (5) is possible in one movement.

5. Method according to one of Claims 1 to 4, **characterized in that** the detection of the data on the surroundings of the longitudinal parking space (5) also includes objects on the side lying opposite the longitudinal parking space (5).

6. Method according to one of Claims 1 to 5, **characterized in that** the maximum cutting-in radius is selected such that a collision with objects on the side lying opposite the longitudinal parking space (5) is avoided.

7. Method according to Claim 6, **characterized in that** in the case of a maximum cutting-in radius with which a collision with an object on the side lying opposite the longitudinal parking space (5) is avoided and which does not permit parking in one movement, a plurality of necessary manoeuvres are calculated and, if appropriate, displayed.

8. Method according to one of Claims 5 to 7, **characterized in that** in cases in which no object is detected on the side lying opposite the longitudinal parking space (5), the maximum cutting-in radius is selected such that parking is possible in one movement.

## Revendications

1. Procédé pour aider un conducteur lors de la manoeuvre de stationnement dans un créneau de stationnement en longueur (5), dans lequel des données de l'environnement du créneau de stationnement en longueur (5) sont acquises en passant à côté, et une trajectoire de stationnement (1 ; 43) adéquate est calculée à partir de données acquises, **caractérisé en ce que** la trajectoire de stationnement (1 ; 43) est calculée de manière à ce qu'un premier rayon d'insertion parcouru par le véhicule soit maximal afin qu'un déboîtement du véhicule lors de la manoeuvre de stationnement soit minimisé de manière à ce qu'il n'y ait pas de déboîtement du véhicule sur une voie de circulation opposée et qu'une collision avec les objets délimitant le créneau de stationnement en longueur (5) et qu'une collision avec des objets sur la voie de circulation opposée soient évitées.

2. Procédé selon la revendication 1, **caractérisé en ce que** le rayon d'insertion maximalement possible est calculé en partant de la position actuelle du véhicule.

3. Procédé selon la revendication 1, **caractérisé en ce que**, en cas d'un rayon d'insertion maximal potentiel plus grand à partir d'une position de départ, laquelle se trouve avant la position actuelle du véhicule, une indication est donnée au conducteur pour continuer d'avancer.

4. Procédé selon l'une des revendications 1 à 3, **caractérisé en ce que** le rayon d'insertion maximal est choisi de manière à ce qu'une manoeuvre de stationnement dans le créneau de stationnement en longueur (5) soit possible d'un seul coup.

5. Procédé selon l'une des revendications 1 à 4, **caractérisé en ce que** l'acquisition des données de l'environnement du créneau de stationnement en longueur (5) englobe également des objets sur le côté situé en vis-à-vis du créneau de stationnement en longueur (5).

6. Procédé selon l'une des revendications 1 à 5, **caractérisé en ce que** le rayon d'insertion maximal est choisi de manière à éviter une collision avec des objets sur le côté situé en vis-à-vis du créneau de stationnement en longueur (5).

7. Procédé selon la revendication 6, **caractérisé en ce qu'**en cas d'un rayon d'insertion maximal avec lequel on évite une collision avec un objet sur le côté situé en vis-à-vis du créneau de stationnement en longueur (5), lequel a pour conséquence qu'une manoeuvre de stationnement d'un seul coup n'est pas possible, on calcule plusieurs manoeuvres nécessaires et on les affiche le cas échéant.

8. Procédé selon l'une des revendications 5 à 7, **caractérisé en ce que**, dans des cas où aucun objet n'est acquis sur le côté situé en vis-à-vis du créneau de stationnement en longueur (5), le rayon d'insertion maximal est choisi de manière à ce qu'une manoeuvre de stationnement d'un seul coup soit possible.
